# EUROPÄISCHE PATENTSCHRIFT

(11) **EP 0 610 661 B1**
(45) Veröffentlichungstag und Bekanntmachung des Hinweises auf die Patenterteilung: **20.11.1996**
(21) Anmeldenummer: 94100254.5
(22) Anmeldetag: 10.01.1994
(51) Int. Cl.: B09B 1/00

(54) **Verfahren und Vorrichtung zum Verfestigen einer Deponie von vorverdichtetem Altmüll unter Erschliessung von zusätzlicher Aufnahmekapazität für Frischmüll**
Method and device for compacting a dump of old precompressed waste and obtaining a supplementary receiving capacity for new waste
Procédé et dispositif pour compacter une décharge de déchets anciens précomprimés et obtenir une capacité supplémentaire de réception de nouveaux déchets

(30) Priorität: 06.02.1993 DE 4303518
(43) Veröffentlichungstag der Anmeldung: 17.08.1994
(73) Patentinhaber: STAHL- UND APPARATEBAU HANS LEFFER GmbH, D-66125 Saarbrücken (DE)
(72) Erfinder: Leffer, Michael, D-66440 Blieskastel (DE); Büsching, Rolf, D-49201 Dissen (DE)
(74) Vertreter: Flaccus, Rolf-Dieter, Dr.

(56) Entgegenhaltungen:
- WO-A-92/04137
- DE-A- 3 511 556
- US-A- 3 675 428
- US-A- 3 835 652
- PROSPEKT 10-2D: 'TIEFENRÜTTELVERFAHREN KELLER GRUNDBAU GMBH August 1991

## Beschreibung

Die Erfindung betrifft ein Verfahren sowie eine Vorrichtung zum Verfestigen einer Deponie von vorverdichtetem Altmüll unter Erschließung von zusätzlicher Aufnahmekapazität für Frischmüll, wobei ein Verdrängerkörper zwecks Bildung eines Hohlraums im Vollverdrängerverfahren in die Deponie niedergebracht, danach gezogen und der so entstandene Hohlraum mit frischem Müll verfüllt und dieser unter Verwendung eines Fallgewichtes verdichtet wird.

Die Entsorgung von Müll, insbesondere von Hausmüll, ist zu einem der gravierendsten Probleme unserer Zeit und unseres Lebensraumes geworden. Die Kapazitäten bestehender Mülldeponien sind begrenzt und vielfach nahezu erschöpft. Die Bereitstellung weiterer neuer Standorte scheitert vielfach am Widerstand der Anwohner.
Es ist daher ein naheliegendes Postulat, die Aufnahmekapazität bestehender Mülldeponien einerseits möglichst weitgehend auszuschöpfen und andererseits zusätzliche Aufnahmekapazität für Frischmüll durch weitgehendes Verfestigen des bereits deponierten Altmülls zu erhöhen. Bekannt ist beim Stand der Technik ein Verfahren zum Verfestigen des Müllhaufwerks in Deponien durch Verdichten im Überrollen mit schweren Radladern, Walzen und/oder Stachelwalzen bzw. Vibrationsverdichtern. Es handelt sich dabei um eine reine Oberflächenverfestigung mit vergleichsweise geringem Verdichtungsgrad, der in vertikaler Richtung erheblich abnimmt, weil Deponielagen von Müll ein elastisches Verhalten aufweisen und mindestens teilweise der Verdichtungsarbeit durch Zurückfederung widerstehen.
Um hier Abhilfe zu schaffen, wurde bereits versucht, Mülldeponien auch in tieferen Schichten zu verfestigen und zu verdichten. Zu diesem Zweck wurden Versuche unternommen, an der Unterseite verschlossene Rohre in eine Deponie einzuvibrieren, wie dies beispielsweise beim Einvibrieren von Spuntwänden oder Pfählen ins Erdreich bekannt ist. Durch einvibrierte Rohre, die anschließend gezogen werden, sollten Hohlräume geschaffen und anschließend mit Müll aufgefüllt werden.
Das Verfahren hat sich als schwierig und im Verhältnis zum Aufwand unergiebig erwiesen. Infolge der bereits angesprochenen elastischen Verhaltensweise von Müll werden die Vibrationen beim Einbringen eines unten geschlossenen Rohres erheblich gedämpft, weshalb der Rohrvorschub vergleichsweise gering ist. Diese Schwierigkeiten nehmen mit steigendem Rohrdurchmesser überproportional zu. Bei einem gewissen Rohrdurchmesser geht der stetige Rohrvorschub in eine stehende Vibrationsbewegung über, die nur durch so schwere schwingende Massen überwunden werden könnte, daß die hierzu aufzubringenden Mittel und Energien in keinem wirtschaftlichen Verhältnis zum erzielten Ergebnis stehen.

Der Erfindung liegt die Aufgabe zugrunde, ein Verfahren und eine Vorrichtung der im Oberbegriff von Anspruch 1 und 8 genannten Art anzugeben und so weit zu verbessern, daß damit die genannten Schwierigkeiten bei der Tiefenverdichtung einer Deponie von vorverdichtetem Altmüll unter Erschließung von zusätzlicher Aufnahmekapazität für Frischmüll mit wirtschaftlichen Mitteln ermöglicht wird.

Zur Lösung wird bei einem Verfahren der im Oberbegriff von Anspruch 1 genannten Art vorgeschlagen, daß als Verdrängerkörper ein eine Gewindespitze aufweisendes Rohr verwendet und dieses unter Rotation um eine vertikale Achse sowie unter Einwirkung axialer Druckkräfte mittels eines Schraubvorganges in die Deponie eingedreht wird.

Eine Ausgestaltung sieht vor, daß das Rohr unter Verwendung von einer mit einer Hebevorrichtung zusammenwirkenden Rohrdrehmaschine in die Deponie eingeschraubt wird.

Infolge Verwendung des eine Gewindespitze aufweisenden Rohres, welches mit Hilfe einer sogenannten Rohrdrehmaschine unter vertikalem Druck in den Müll eingeschraubt wird, wobei der Müll seitlich verdrängt und bis in größere Tiefen verfestigt wird, gelingt unter Vermeidung der bei einem dynamischen Einrüttelverfahren auftretenden Schwierigkeiten das Niederbringen eines Rohres mit vergleichsweise großem Durchmesser in eine elastisch- nachgiebige Stoffe enthaltende Deponie von vorverdichtetem Altmüll bis in größere Tiefen, beispielsweise von 10 bis 15 m. Dabei ist das Verfahren, wobei eine ansich bekannte und mit einer Hebevorrichtung zusammenwirkende Rohrdrehmaschine verwendet wird, mit vergleichsweise wirtschaftlichem Einsatz von technischen Mitteln und Energie durchführbar.

Eine Ausgestaltung sieht vor, daß das Rohr in trockenem Zustand, d.h. ohne Verwendung eines Bohrfluids, in die Deponie eingeschraubt wird.
Je nach Materialbeschaffenheit, Verdichtungsgrad und Arbeitsparametern wie Rohrdurchmesser etc. kann das Rohr auch unter Zugabe von Bohrfluid in die Deponie eingeschraubt werden. Dabei kann dann fallweise ein Rohr mit einem für dynamisches Einrütteln ungeeignet großem Durchmesser von z.B. 1500 bis 2000 mm verwendet werden. Dabei wird das Bohrfluid unter Druck beispielsweise aus der Gewindespitze in das zu durchbohrende Müllhaufwerk eingetragen.
Dieses Bohrfluid dient einerseits zur Verringerung des Reibungswiderstandes zwischen der drehenden Rohroberfläche und dem Altmüll der Deponie und kann andererseits zur Verfestigung der Wände des vom Rohr geschaffenen Hohlraumes beitragen. Hierfür kann fallweise dem Bohrfluid ein Anteil von hydraulischem Bindemittel beigefügt werden, beispielsweise durch Verwendung von Zementschlämme.

Eine weitere vorteilhafte Ausgestaltung sieht vor, daß nach Ziehen des Verdrängerkörpers ein aufweitbarer Spreizkörper in das Bohrloch eingeführt und unter Anwendung vergleichsweise sehr großer, quer zur Achse des Bohrlochs wirkendener Spreizkräfte in wenigstens einer Ebene längs der Achse des Bohrloches quer zu dieser aufgespreizt wird. Das Verfahren sieht dabei vor, daß der Spreizkörper durch Einwirkung vergleichsweise sehr hoher, hydraulisch erzeugter, quer zur Achse des Bohrlochs wirkender Spreiz- bzw. Druckkräfte zur Seite ausgedehnt wird und dabei das Volumen des Bohrloches erweitert.
Durch diese vergleichsweise unkomplizierte Aufspreizung bzw. Erweiterung des Bohrloches wird einerseits eine zusätzliche Verfestigung der Deponie in der Tiefe und andererseits eine zusätzliche Aufnahmekapazität für Frischmüll geschaffen.

Eine Vorrichtung zum Verfestigen einer Deponie von vorverdichtetem Altmüll unter Erschließung von zusätzlicher Aufnahmekapazität für Frischmüll, insbesondere zur Durchführung des erfindungsgemäßen Verfahrens sieht vor, daß diese eine mit einer Hebevorrichtung zusammenwirkende Rohrdrehmaschine zum Eindrehen eines rohrförmigen Verdrängerkörpers mit geschlossener Gewindespitze in die Deponie aufweist.
Eine Ausgestaltung sieht vor, daß die Gewindespitze ein schlanker Konus mit einer Anordnung von helixförmig ausgebildeten Gewindeflächen bzw. Wendeln ist. Weiterhin sieht die Vorrichtung einen Spreizkörper vor, der wenigstens zwei in einer vertikalen Ebene teilbare bzw. spreizbare Flächenteile aufweist, die mittels hydraulischer Kolben/Zylinder-Einheiten nach beiden Seiten quer zur Bohrlochachse spreizbar sind.

Die Erfindung wird in schematischen Zeichnungen in einer bevorzugten Ausführungsform gezeigt, wobei aus den Zeichnungen weitere vorteilhafte Einzelheiten der Erfindung entnehmbar sind. Es zeigen :
- Figur 1:: Eine Seitenansicht einer mit einem Kran zusammenwirkenden Rohrdrehmaschime beim Eindrehen eines Rohres in eine Deponie;

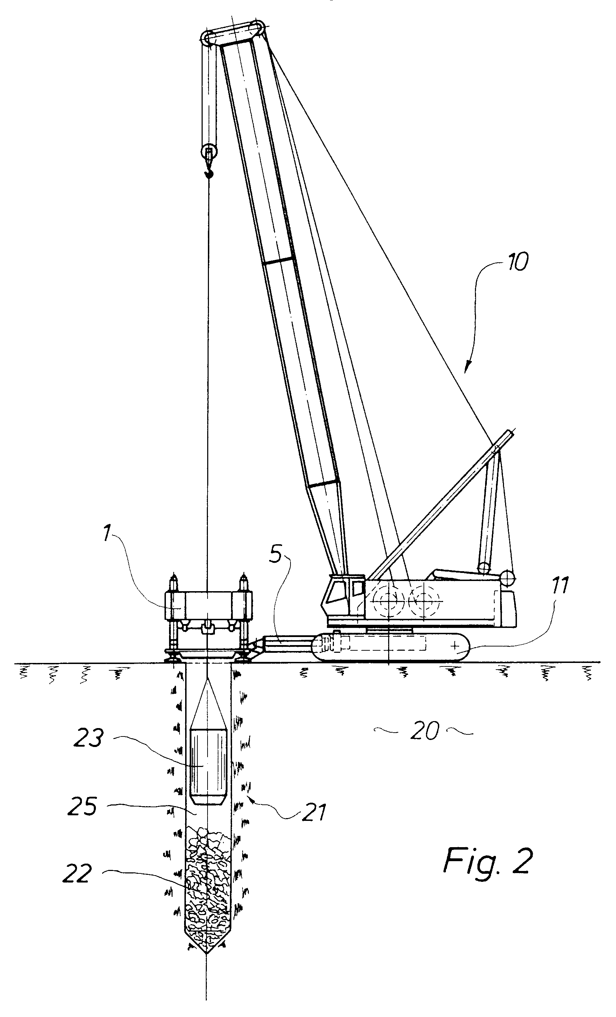

- Figur 2:: Die Vorrichtung beim Verdichten eines in das Bohrloch gefüllten Frischmülls, ebenfalls in Seitenansicht;
- Figur 3:: Eine Seitenansicht der Rohrdrehmaschine;
- Figur 4:: Die Rohrdrehmaschine in Draufsicht.

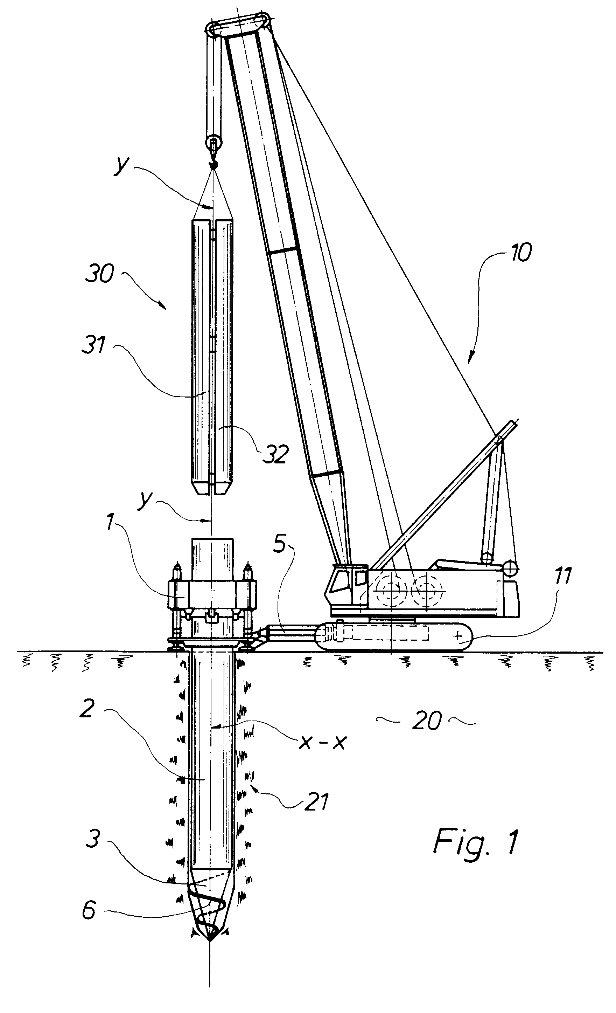

In der Figur 1 ist eine Rohrdrehmaschine 1 gezeigt, wie sie üblicherweise im Zusammenwirken mit einer Hebevorrichtung 10 zum wirtschaftlichen Abteufen von verrohrten Bohrungen insbesondere in schweren Böden zum Einsatz gebracht wird. Im Gegensatz zu diesem bekannten Einsatz, wobei die Böden fräsend bearbeitet werden, um auch Gesteinsformationen durchbohren zu können, wofür dann am Ende des Rohres eine Bohrkrone mit Schneidzähnen angeordnet ist, wird beim erfindungsgemäßen Verfahren ein unten geschlossenes und mit einer Bohrspitze 3 ausgebildetes Einschraubrohr 2 verwendet. Bei der Rohrdrehmaschine 1 handelt es sich um eine hydraulisch amgetriebene, kontinuierlich drehende und an Vertikalführungen geführte Rohrdrehmachine üblicher Bauart, welche mittels Anschlußgliedern 5 mit dem Raupenketten-Fahrwerk 11 der Hebevorrichtung 10 drehfest zu einer zusammenwirkenden Einheit verbunden ist. Diese Rohrdrehmaschine 1 ist für den vorgesehenen Zweck der Verdichtung einer Deponie 20 bestens geeignet, weil sehr hohe Torsions-Druck- und Zugkräfte auf das Bohrrohr übertragen werden können, wodurch das Eintreiben des Rohres 2 in sehr wirtschaftlicher Weise verwirklicht wird. Beim Einschraubvorgang des Rohres 2 wird der anstehende Altmüll 21 durch die an der Spitze 3 des Rohres 2 befindlichen helixförmigen Schraubwendeln 6 seitlich verdrängt und bis in größere Tiefen, beispielsweise bis in 10 bzw. 15 m Tiefe verfestigt. Anschließend wird das Rohr 2 gezogen und das so entstandene Bohrloch 25 mit Frischmüll 22 verfüllt und mittels eines Fallgewichtes 23 verdichtet.

Entsprechend der Darstellung in Figur 1 wird das Rohr 2 im trockenen Zustand, d.h. ohne Verwendung eines Bohrfluids, in die Deponie 20 eingeschraubt.
Bei vergleichsweise schwierigen Einschraubverhältnissen, beispielsweise infolge sehr elastischer Schichtungen des Altmülls 21, kann aber auch von der Maßnahme Gebrauch gemacht werden, daß das Rohr 2 unter Zugabe von Bohrfluid in die Deponie eingeschraubt wird. Dabei könnte dann das Bohrfluid über eine Drehverbindung unter Druck aus der Gewindespitze 3 in das zu durchbohrende Müllhaufwerk 21 eingetragen werden. Wie dazu vorgängig ausgeführt, kann dem Bohrfluid ein Anteil hydraulischen Bindemittels zugesetzt sein, beispielsweise Zementschlämme, wodurch einerseits die Wandreibung zwischen dem Rohr 2 und dem anstehenden Müll 21 der Deponie 20 wesentlich verringert und die Wandung des Bohrlochs 25 zugleich verfestigt wird.

Mit dem Verfahren wird in überraschender Weise erstmals die Möglichkeit geschaffen, daß ein Rohr mit einem für dynamisches Einrütteln ungeeignet großem Durchmesser von z.B. 1500 bis 2000 mm verwendet wird, weil es durch die Anordnung von helixförmig ausgebildeten Gewindeflächen 6 an der Gewindespitze 3 beim Vortrieb unter Einwirkung von drehender Schraubbewegung und vertikalen Druck den anstehenden Müll 21 in radialer Richtung verdrängt und dabei entsprechend der Aufgabe des Vortriebsrohres 2 die Deponie in der Tiefe verdichtet.
In der Figur 1 ist an der Hebevorrichtung 10 hängend ein Spreizkörper 30 gezeigt, der jedoch entgegen der Darstellung erst dann in das Bohrloch 25 eingefahren werden kann, wenn vorher das Rohr 2 aus dem Bohrloch 25 herausgezogen wurde. Lediglich aus Gründen der Vereinfachung ist in der Figur 1 der an der Hebevorrichtung 10 hängende Spreizkörper 30 dargestellt. Dieser wird nach dem Einsetzen durch Einwirkung vergleichsweise sehr hoher, hydraulisch erzeugter, quer zur Achse des Bohrlochs wirkender Spreiz- bzw. Druckkräfte zur Seite ausgedehnt, wobei das Volumen des Bohrlochs 25 erweitert wird. Zu diesem Zweck weist der Spreizkörper 30 wenigstens zwei in einer vertikalen Ebene y-y teilbare bzw. spreizbare Flächenteile 31 und 32 auf.

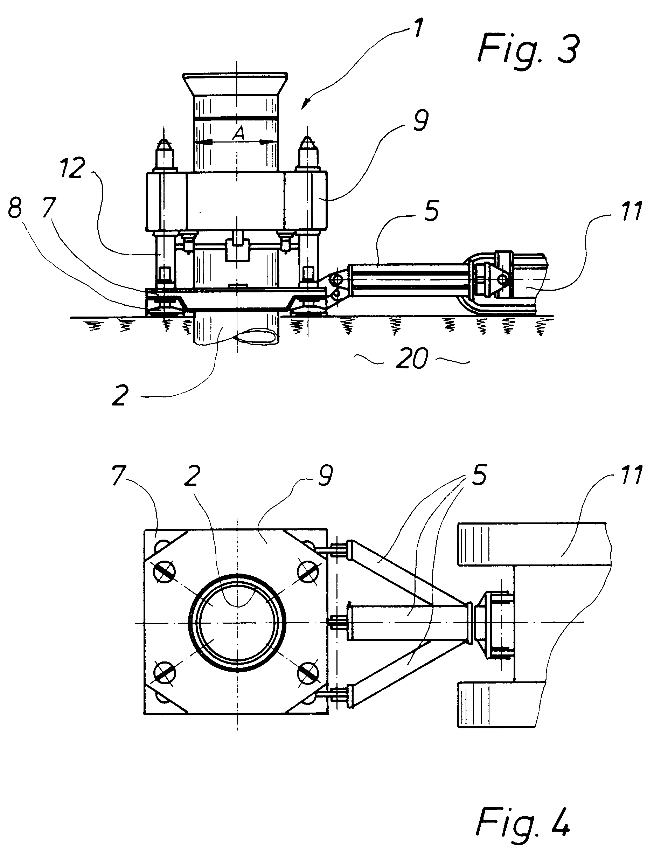

In der Figur 3 ist die Rohrdrehmaschine 1 in etwas vergrößertem Maßstab gezeigt. Sie ist mit den Anschlußgliedern 5 drehfest mit dem Raupenketten-Fahrwerk 11 der Hebevorichtung 10 verbunden. Sie besitzt als Fundament einen Grundrahmen 7, welcher mit einstellbaren Füßen bzw. Fußplatten 8 auf der Ebene der Deponie 20 abgestützt ist. Die Dreheinrichtung 9 ist mit einem hydraulischen Antrieb ausgestattet und kraftschlüssig mit dem Rohr 2 verbunden. Mit fortschreitender Absenkung des Rohres 2 gleitet die Dreheinrichtung 9 an Vertikalführungen 12 mit dem Rohr mit. Dabei kann der Grundrahmen 7 durch Einfahren der Hubstempel 12 angehoben und somit das komplette Gewicht der Rohrdrehmaschine aktiviert werden zum Einpressen des Verdrängerrohres 2. Denkbar ist, daß der Grundrahmen 7 der Rohrdrehmaschine beispielsweise mit Betongewichten zusätzlich beschwert wird, um den Bohranpreßdruck zu erhöhen. Am Ende der vorgesehenen vertikalen Bewegungsstrecke wird jeweils die Verbindung zwischen der Dreheinrichtung 9 und dem Rohr 2 gelöst, die Dreheinrichtung 9 mit den Führungen mittels der Hubstempel 12 nach oben gefahren, die drehfeste Verbindung mit dem Rohr 2 wieder hergestellt und der Einschraubvorgang entsprechend in kurzen Intervallen fortgesetzt.

Figur 4 zeigt eine Draufsicht auf die Rohrdrehmaschine, wobei gleiche Teile mit gleichen Bezugsziffern bezeichnet sind.

## Patentansprüche

1. Verfahren zum Verfestigen einer Deponie von vorverdichtetem Altmüll unter Erschließung von zusätzlicher Aufnahmekapazität für Frischmüll, wobei ein Verdrängerkörper zwecks Bildung eines Hohlraums im Vollverdrängerverfahren in die Deponie niedergebracht, danach gezogen und der so entstandene Hohlraum mit frischem Müll verfüllt und dieser unter Verwendung eines Fallgewichtes verdichtet wird, **dadurch gekennzeichnet**,
daß als Verdrängerkörper ein eine Gewindespitze (3) aufweisendes Rohr (2) verwendet und dieses unter Rotation um eine vertikale Achse (x-x) sowie unter Einwirkung axialer Druckkräfte mittels eines Schraubvorganges in die Deponie (20,21) eingedreht wird.

2. Verfahren nach Anspruch 1, dadurch gekennzeichnet, daß das Rohr (2) unter Verwendung einer mit einer Hebevorrichtung (10) zusammenwirkenden Rohrdrehmaschine (1) in die Deponie (20,21) eingeschraubt wird.

3. Verfahren nach Anspruch 1 oder 2, dadurch gekennzeichnet, daß das Rohr (2) im trockenen Zustand, d.h. ohne Verwendung eines Bohrfluids, in die Deponie (20,21) eingeschraubt wird.

4. Verfahren nach Anspruch 1 oder 2, dadurch gekennzeichnet, daß das Rohr (2) unter Zugabe von Bohrfluid in die Deponie (20,21) eingeschraubt wird.

5. Verfahren nach einem der Ansprüche 1 bis 4, dadurch gekennzeichnet, daß ein Rohr (2) mit einem für dynamisches Einrütteln ungeeignet großem Durchmesser von z.B. 1500 bis 2000 mm verwendet wird.

6. Verfahren nach Anspruch 5, dadurch gekennzeichnet, daß das Bohrfluid unter Druck aus der Gewindespitze (3) in das zu durchbohrende Müllhaufwerk (21) eingetragen wird.

7. Verfahren nach einem oder mehreren der Ansprüche 1 bis 6, dadurch gekennzeichnet, daß nach Ziehen des Verdrängerkörpers (2) ein aufweitbarer Spreizkörper (30) in das Bohrloch (25) eingeführt und unter Anwendung vergleichsweise sehr großer, quer zur Achse des Bohrlochs (25) wirkender Spreizkräfte in wenigstens einer Ebene längs der Achse (x-x) des Bohrloches (25) quer zu dieser aufgespreizt wird.

8. Verfahren nach Anspruch 7, dadurch gekennzeichnet, daß der Spreizkörper (30) durch Einwirkung vergleichsweise sehr hoher, hydraulisch erzeugter, quer zur Achse (x-x) des Bohrloches (25) wirkender Spreiz- bzw. Druckkräfte zur Seite ausgedehnt und dabei das Volumen des Bohrloches (25) erweitert wird.

9. Vorrichtung zum Verfestigen einer Deponie von vorverdichtetem Altmüll unter Erschließung von zusätzlicher Aufnahmekapazität für Frischmüll, insbesondere zur Durchführung des erfindungsgemäßen Verfahrens nach einem der Ansprüche 1 bis 8, dadurch gekennzeichnet, daß diese Vorrichtung eine mit einer Hebevorrichtung (10) zusammenwirkende Rohrdrehmaschine (1) zum Eindrehen eines rohrförmigen Verdrängerkörpers (2) mit geschlossener Gewindespitze (3) in die Deponie (20,21) aufweist.

10. Vorrichtung nach Anspruch 9, dadurch gekennzeichnet, daß die Gewindespitze (3) ein schlanker Konus mit einer Anordnung von helixförmig ausgebildeten Gewindeflächen bzw. Wendeln (6) ist.

11. Vorrichtung nach einem der Ansprüche 9 oder 10, dadurch gekennzeichnet, daß dieser ein in das Bohrloch (25) einführbar ausgebildeter Spreizkörper (3) zugeordnet ist und der Spreizkörper (3) wenigstens zwei in einer vertikalen Ebene (y-y) teilbare bzw. spreizbare Flächenteile (31) bzw. (32) aufweist, die mittels hydraulischer Kolben/Zylinder-Einheiten nach beiden Seiten quer zur Bohrlochachse (x-x) spreizbar sind.

## Claims

1. A process for consolidating a landfill of old precompressed waste and obtaining supplementary receiving capacity for new waste, whereby a displacement body is sunk into the landfill, utilizing a complete-displacement process, in order to form a cavity, and is thereafter extracted, and the thus-obtained cavity is filled with new waste, and said new waste is compacted using a drop weight, **characterized in that**
as displacement body a tube (2) having a crest of thread (3) is used, and that said tube (2) is screwed under rotation, by means of a screwing process, into the landfill (20,21), about a vertical axis (x-x) and under action of axial pressure forces.

2. The process according to claim 1, characterized in that the tube (2) is screwed into the landfill (20,21) utilizing a pipe turning machine (1) cooperating with a lifting device (10).

3. The process according to claim 1 or 2, characterized in that the tube (2) is srewed into the landfill (20,21) in dry condition, i.e. not using drilling fluid.

4. The process according to 1 or 2, characterized in that the tube (2) is screwed into the landfill (20,21) under addition of drilling fluid.

5. The process according to any one of claims 1 to 4, characterized in that a tube (2) is used having a diameter that is not suitable for dynamic vibrating, for instance a diameter of 1500 to 2000 mm.

6. The process according to claim 5, characterized in that the drilling fluid is introduced under pressure from the crest of thread (3) into the heap of waste (21) to be drilled.

7. The process according to one or more of claims 1 to 6, characterized in that subsequent to extraction of the displacement body (2), a spreadable expansion body (30) is lowered into the drilled hole (25), and is spread in at least one plane along the axle (x-x) of the drilled hole (25) transversely to said plane, utilizing comparatively very large expansion forces which act transversely to the axis of the drill hole (25).

8. The process according to claim 7, chracterized in that the expansion body (30) is laterally expanded by the action of comparatively very large, hydraulically generated expansion and pressure forces which act transversely to the axis (x-x) of the drilled hole (25), thereby increasing the volume of the drilled hole (25).

9. The device for consolidating a landfill of old pre-compressed waste and obtaining supplementary receiving capacity for new waste, in particular for carrying out the process of this invention according to any one of claims 1 to 8, characterized in that said device is provided with a pipe turning machine (1), cooperating with a lifting device (10), for screwing-in of a tube-shaped displacement body (2) having a closed crest of thread (3) into the landfill (20,21).

10. The device according to claim 9, characterized in that the crest of thread (3) is an acutely conical taper comprising an arrangement of helically formed thread surfaces or spirals (6).

11. The device according to any one of claims 9 or 10, characterized in that an expansion body (3) formed such that it can be introduced into the drilled hole (25) is associated thereto, and that said expansion body (3) is provided with at least two surface parts (31) and (32) which are divisible and spreadable in a vertical plane (y-y) and which can be spread by means of hydraulic piston/cylinder units towards both sides transversely to the drill hole axis (x-x).

## Revendications

1. Procédé pour la consolidation d'une décharge d'anciennes ordures précompactées, avec ouverture à l'exploitation d'une capacité supplémentaire de réception d'ordures fraîches, dans lequel un corps de refoulement est enfoncé dans la décharge par un procédé de refoulement complet en formant un espace vide, est ensuite extrait, et l'espace vide ainsi formé est rempli d'ordures fraîches, celles-ci étant compactées par recours à la chute d'un poids, caractérisé en ce que comme corps de refoulement, on utilise un tube (2) présentant une pointe filetée (3), et que ce tube est vissé dans la décharge (20, 21) en étant mis en rotation autour d'un axe vertical (x-x) placé sous l'action de forces axiales de compression, au moyen d'un procédé de vissage.

2. Procédé selon la revendication 1, caractérisé en ce que le tube (2) est vissé dans la décharge (20, 21) par recours à une machine de mise en rotation de tube (1) qui coopère avec un dispositif de levage (10).

3. Procédé selon la revendication 1 ou 2, caractérisé en ce que le tube (2) est vissé à sec dans la décharge (20, 21), c'est-à-dire sans recours à un fluide de forage.

4. Procédé selon la revendication 1 ou 2, caractérisé en ce que le tube (2) est vissé dans la décharge (20, 21) avec addition d'un fluide de forage.

5. Procédé selon l'une des revendications 1 à 4, caractérisé en ce que l'on utilise un tube (2) qui présente un grand diamètre, par exemple de 1500 à 2000 mm, qui ne convient pas pour un vibrage dynamique.

6. Procédé selon la revendication 5, caractérisé en ce que le fluide de forage est injecté sous pression par la pointe filetée (3) dans le tas d'ordures (21) à forer.

7. Procédé selon l'une ou plusieurs des revendications 1 à 6, caractérisé en ce qu'après l'extraction du corps de refoulement (2), un corps expansible (30) est enfoncé dans le trou foré (25), et est dilaté transversalement par rapport à l'axe (x-x) du trou foré (25) en recourant à des forces de dilatation comparativement très importantes, qui agissent transversalement à l'axe du trou foré (25) dans au moins un plan passant par cet axe.

8. Procédé selon la revendication 7, caractérisé en ce que le corps expansible (30) est dilaté latéralement par l'action de forces de dilatation ou de compression comparativement très grandes, créées de manière hydraulique et agissant transversalement par rapport à l'axe (x-x) du trou foré (25), et que le volume du trou foré (25) en est ainsi agrandi.

9. Dispositif pour la consolidation d'une décharge d'anciennes ordures précompactées avec ouverture à l'exploitation d'une capacité supplémentaire de réception d'ordures fraîches, en particulier en vue de la réalisation du procédé selon l'invention décrit dans l'une des revendications 1 à 8, caractérisé en ce que ce dispositif présente une machine de mise en rotation de tube (1) qui coopère avec un dispositif de levage (10) et destinée à visser un corps de refoulement (2) de forme tubulaire et à pointe filetée fermée (3) dans la décharge (20, 21).

10. Dispositif selon la revendication 9, caractérisé en ce que la pointe filetée (3) est un cône élancé présentant un agencement de surface filetée ou de pales (6) configurées en forme d'hélice.

11. Dispositif selon l'une des revendications 9 ou 10, caractérisé en ce qu'à ce dispositif est associé un corps expansible (3) configuré de manière à pouvoir être inséré dans le trou foré (25), et en ce que le corps expansible (3) présente au moins deux parties de surface (31) ou (32) qui peuvent être séparées et écartées dans un plan vertical (y-y), et peuvent être écartées vers les deux côtés, transversalement à l'axe du trou foré (x-x), au moyen d'unités hydrauliques à piston et cylindre.
